# EUROPÄISCHE PATENTSCHRIFT

(11) **EP 2 428 861 B1**
(45) Veröffentlichungstag und Bekanntmachung des Hinweises auf die Patenterteilung: **01.05.2013**
(21) Anmeldenummer: 10176176.5
(22) Anmeldetag: 10.09.2010
(51) Int. Cl.: G05B 19/418

(54) **Verfahren zur rechnergestützten Analyse einer Automatisierungsanlage**
Method for analysing an automation system with the help of a computer
Procédé d'analyse assistée par ordinateur d'une installation d'automatisation

(43) Veröffentlichungstag der Anmeldung: 14.03.2012
(73) Patentinhaber: Siemens Aktiengesellschaft, 80333 München (DE)
(72) Erfinder: Misra, Sandeep, 90409 Nürnberg (DE)

(56) Entgegenhaltungen:
- EP-A1- 1 035 459
- EP-A2- 1 021 014
- WO-A2-03/067853

## Beschreibung

Die Erfindung betrifft ein Verfahren zur rechnergestützten Analyse einer Automatisierungsanlage sowie entsprechende Vorrichtung und Computerprogrammprodukt

Aus dem Stand der Technik ist es bekannt, die Topologie von einer Vielzahl von miteinander vernetzten Geräten automatisiert zu ermitteln und graphisch zu visualisieren. Dabei werden basierend auf geeigneten Protokollen, wie z.B. SNMP (SNMP = Simple Network Management Protocol), Informationen aus den Geräten ausgelesen und hierüber die einzelnen Netzwerkverbindungen zwischen den Geräten ermittelt. Basierend darauf kann dann in geeigneter Weise die Vernetzung der Geräte in der Form einer Netzwerktopologie mit entsprechenden Strukturen, wie Sternen, Ringen und Bäumen, auf einer Anzeige wiedergegeben werden.

Aus WO 03/067853 A2 ist ein Verfahren zur Analyse eines Netzwerks zum Austausch elektronischer Daten bekannt, bei dem jeder Teilnehmer des Netzwerks automatisch registriert wird. Darüber hinaus wird die hierarchische Position jedes Teilnehmers im Netzwerk anhand der Netzadresse des Teilnehmers bestimmt. Hieraus wird die Struktur des Netzwerks generiert und anschließend gespeichert.

In EP 1 035 459 A1 ist ein Automatisierungssystem beschrieben, bei dem in einem Unternehmen vorhandene vernetzte Server und Arbeitsplatzrechner zur Erhöhung von Verfügbarkeit und Meßdichte genutzt werden. Für eine Leitebene bestimmte Daten können sowohl auf Prozeßebene als auch auf Feldebene gespeichert und mit Zeitmarkierungen versehen werden.

EP 1 021 014 A2 offenbart ein Verfahren zur Steuerung eines Kommunikationsnetzes mit Netzelementen, die über eine Vielzahl von Verbindungen verbunden sind und eine Vielzahl von Kommunikationsdiensten an Endbenutzer des Kommunikationsnetzes bereitstellen. Basierend auf Netzkonfigurationsinformationen werden für die Kommunikationsdienste Visualisierungskonfigurationsinformationen erstellt. Die Visualisierungskonfigurationsinformationen stellen eine Basis für eine Vielzahl von kommunikationsdienstspezifischen Sichten auf das Kommunikationsnetz dar. Jede kommunikationsdienstspezifische Sicht umfaßt Netzelemente und Verbindungen zwischen den Netzelementen, die für eine Bereitstellung eines jeweiligen Kommunikationsdienstes erforderlich sind. Darüber hinaus umfassen die kommunikationsdienstspezifischen Sichten zumindest eine physikalische oder logischen Netzkonfiguration.

Im Rahmen des Betriebs von Automatisierungsanlagen spielt nicht nur die Vernetzung der Geräte untereinander eine Rolle, sondern auch die Funktion der einzelnen Geräte im Rahmen des Automatisierungsprozesses, der über die Automatisierungsanlage durchgeführt wird. Eine Generierung einer Netzwerktopologie zwischen den vernetzten Geräten einer Automatisierungsanlage gibt jedoch keinen Aufschluss über die Funktionen der Geräte in der Automatisierungsanlage und damit über die Topologie der Anlage.

Aufgabe der Erfindung ist es deshalb, eine Automatisierungsanlage mit einer Vielzahl von vernetzten Geräten automatisch derart zu analysieren, dass die Topologie der Automatisierungsanlage basierend auf den Funktionalitäten der einzelnen Geräte visualisiert wird.

Diese Aufgabe wird durch das Verfahren gemäß Patentanspruch 1 bzw. die Vorrichtung gemäß Patentanspruch 13 bzw. das Computerprogrammprodukt gemäß Patentanspruch 14 gelöst. Weiterbildungen der Erfindung sind in den abhängigen Ansprüchen definiert.

Das erfindungsgemäße Verfahren dient zur rechnergestützten Analyse einer Automatisierungsanlage, welcher mehrere miteinander vernetzte Geräte zugeordnet sind. Diese Geräte sind Bestandteil der Automatisierungsanlage bzw. Geräte, welche mit der Automatisierungsanlage kommunizieren können, z.B. Geräte aus Informationsnetzen, welche an die Automatisierungsanlage angebunden sind.

Erfindungsgemäß werden Informationen zu den Geräten, welche deren Gerätetypen und Verbindungen untereinander umfassen, erfasst und eine Netzwerktopologie generiert, welche die Vernetzung der Geräte repräsentiert. Dabei kann z.B. eine zentrale Überwachungsinstanz vorgesehen sein, welche die Informationen zu den Geräten zentral sammelt, indem sie die Informationen beispielsweise mittels des SNMP-Protokolls ausliest. Die Informationen zu den Geräten können in den jeweiligen Geräten basierend auf dem LLDP-Protokoll (LLDP = Link Layer Discovery Protocol) hinterlegt sein. Gemäß diesem Protokoll können direkt miteinander verbundene Nachbargeräte Informationen austauschen, welche dann in den einzelnen Geräten in einer sog. Management Information Base hinterlegt sind. Durch den Informationsaustausch zwischen Nachbargeräten erhält man insbesondere auch die Information über bestehenden Verbindungen zwischen den Geräten. Die Generierung einer Netzwerktopologie aus entsprechenden Informationen zu den Geräten ist dabei an sich aus dem Stand der Technik bekannt und wird deshalb nicht näher erläutert. Die Netzwerktopologie kann z.B. mit der Software "Sinema Server" der Siemens AG generiert werden.

Nach der Generierung der Netzwerktopologie wird in dem erfindungsgemäßen Verfahren ein jeweiliges Gerät in Abhängigkeit von dessen Gerätetyp einer Hierarchieebene aus einer Mehrzahl von für die Automatisierungsanlage festgelegten Hierarchieebenen zugewiesen. Anschließend wird eine Topologie der Automatisierungsanlage auf einer Benutzerschnittstelle mit einer entsprechenden Anzeige (z.B. einem Display oder Bildschirm) angezeigt. Auf der Benutzerschnittstelle ist dabei für jede Hierarchieebene ein Abschnitt vorgesehen, wobei die einer jeweiligen Hierarchieebene zugewiesenen Geräte als Elemente in dem für die jeweilige Hierarchieebene vorgesehenen Abschnitt angeordnet sind und basierend auf der Vernetzung gemäß der Netzwerktopologie miteinander verbunden sind. Es werden somit auf der Benutzerschnittstelle entsprechende Elemente der einzelnen Geräte, insbesondere als geeignete graphische Darstellungen (z.B. Icons), und deren Vernetzung wiedergegeben. Die Vernetzung wird dabei insbesondere basierend auf entsprechenden Linien zwischen den Geräten dargestellt. Mit dem erfindungsgemäßen Verfahren wird somit aus einer Netzwerktopologie, welche nicht die Typen der einzelnen vernetzten Geräte berücksichtigt, eine geeignete Topologie einer Automatisierungsanlage abgeleitet, wobei hierfür Informationen betreffend die Gerätetypen der einzelnen Geräte verarbeitet werden.

Erfindungsgemäß ist die hierarchische Struktur der Automatisierungsanlage vorab über eine Zuordnung von Geräten bzw. Gerätetypen zu Hierarchieebenen je nach Anwendungsfall geeignet festgelegt, wobei in einer besonders bevorzugten Ausführungsform die hierarchische Struktur an die hinlänglich aus dem Stand der Technik bekannten Automatisierungspyramide angelehnt ist. Das heißt, eine oder mehrere Hierarchieebenen entsprechen Ebenen aus der Automatisierungspyramide, wie z.B. der Feldebene, der Steuerungsebene, der Leitebene und dergleichen.

Insbesondere spezifizieren die im Rahmen der Erfindung verwendeten Hierarchieebenen die Nähe der darin angeordneten Geräte zum Automatisierungsprozess der Automatisierungsanlage, wobei die Nähe zum Automatisierungsprozess umso größer ist, je tiefer die Hierarchieebene liegt. Das heißt, Geräte, welche direkt auf dem Automatisierungsprozess einwirken, werden in tieferen Hierarchieebenen angeordnet als Geräte, welche übergeordnete Steuerfunktionalitäten übernehmen, bzw. Geräte, welche zwar mit der Automatisierungsanlage vernetzt sind, jedoch keinen direkten Bestandteil dieser Anlage bilden.

Der Gerätetyp kann in den erfindungsgemäßen Verfahren gegebenenfalls nicht nur das einzige Kriterium darstellen, wonach ein Gerät einer Hierarchieebene zugeordnet wird. Insbesondere können zusätzlich auch noch weitere Kriterien, wie z.B. der Aufstellort des jeweiligen Geräts, bei der Zuweisung der Geräte zu Hierarchieebenen berücksichtigt werden. Ist ein Gerät beispielsweise an einem Ort aufgestellt, der außerhalb der Automatisierungsanlage in einem angebundenen Netzwerk liegt, wird das Gerät gegebenenfalls in einer höheren Hierarchieebene angeordnet, als wenn das Gerät vom gleichen Gerätetyp einen direkten Bestandteil der Automatisierungsanlage bildet.

Auch bei einer Anordnung der Geräte innerhalb der Hierarchieebene können die Gerätetypen berücksichtigt werden. Erfindungsgemäß werden vorbestimmte Paare von Gerätetypen, welche direkt gemäß der Netzwerktopologie miteinander verbunden sind, benachbart oder als ein Element auf der Anzeigeeinrichtung angeordnet. Auf diese Weise kann visuell vermittelt werden, welche Geräte räumlich nahe aneinander angeordnet sind bzw. zusammengehören. Insbesondere können beispielsweise vorbestimmte Gerätetypen benachbart oder als ein gemeinsames Element dargestellt werden, welche Baugruppen sind, die zum gleichen Rack bzw. zum gleichen Modul gehören. Beispielsweise können eine Rechnerprozessoreinheit und der entsprechend zugeordnete Kommunikationsprozessor, z.B. in der Form einer Ethernet-Karte, als ein Element oder benachbart auf der Benutzerschnittstelle wiedergegeben werden.

In einer besonders bevorzugten Ausführungsform des erfindungsgemäßen Verfahrens umfasst die Mehrzahl von Hierarchieebenen eine Feldebene und eine Steuerungsebene, wobei der Feldebene direkt am Automatisierungsprozess (z.B. Fertigungs- oder Produktionsprozess) der Automatisierungsanlage beteiligte Geräte zugewiesen sind und der Steuerungsebene mittelbar am Automatisierungsprozess beteiligte Geräte zugewiesen sind. Die Zuweisung erfolgt dabei wiederum in Abhängigkeit von den entsprechenden Gerätetypen der einzelnen Geräte. Die Festlegung, ob ein Gerät direkt am Automatisierungsprozess beteiligt ist oder nur mittelbar, kann je nach Ausgestaltung der Automatisierungsanlage in geeigneter weise vorab spezifiziert werden. Üblicherweise gehören alle Sensoren, Aktoren sowie Eingabe- und/oder Ausgabegeräte, die direkt Aktionen im Rahmen des automatisierten Prozesses durchführen bzw. direkt Parameter dieses Prozesses erfassen und weiterverarbeiten, zur Feldebene. Demgegenüber gehören andere Geräte, welche übergeordnete Funktionen, beispielsweise die Steuerung von mehreren, direkt am Automatisierungsprozess beteiligen Geräten übernehmen, zur Steuerungsebene.

In einer weiteren, besonders bevorzugten Ausführungsform umfasst die Mehrzahl von Hierarchieebenen ferner eine über der Feldebene und der Steuerungsebene angeordnete Leit- und/oder Unternehmensebene. Diese Ebenen können entweder eine gemeinsame Ebene bilden oder gegebenenfalls auch in zwei unterschiedlichen Ebenen aufgeteilt sein, wobei in diesem Fall die Unternehmensebene über der Leitebene liegt. Der Leit- und/oder Unternehmensebene sind dabei die Automatisierungsanlage überwachende Geräte und/oder außerhalb der Automatisierungsanlage angeordnete Geräte zugeordnet, wobei die Zuordnung zu dieser Ebene wiederum unter Berücksichtigung des Gerätetyps der entsprechenden Geräte erfolgt. Bei der Zuordnung von Geräten zu der Leit- bzw. Unternehmensebene wird wiederum der Gerätetyp berücksichtigt. Welche Geräte der Leit- bzw. Unternehmensebene zugeordnet werden, kann wiederum je nach Anwendungsfall bzw. betrachteter Automatisierungsanlage in geeigneter Weise vorab festgelegt werden.

In einer weiteren Ausführungsform des erfindungsgemäßen Verfahrens können vorbestimmte Gerätetypen jeweils zwei benachbarten Hierarchieebenen zugeordnet werden und auf der Benutzerschnittstelle zwischen den entsprechenden Abschnitten dieser Hierarchieebenen angeordnet werden. Dabei können z.B. alle Geräte von einem vorbestimmten Gerätetyp zwischen den entsprechenden Abschnitten positioniert werden. Gegebenenfalls kann jedoch neben dem Kriterium des Gerätetyps auch ein weiteres Kriterium berücksichtigt werden, welches in die Entscheidung mit einfließt, ob ein vorbestimmter Gerätetyp tatsächlich zwischen benachbarten Hierarchieebenen positioniert wird.

In einer weiteren Ausgestaltung des erfindungsgemäßen Verfahrens spezifiziert die ermittelte Netzwerktopologie verschiedene Verbindungsarten zwischen den Geräten, wobei die verschiedenen Verbindungsarten auf der Benutzerschnittstelle visuell unterschieden werden. Beispielsweise können die Verbindungsarten dahingehend unterschieden werden, ob es sich um drahtgebundene elektrische Verbindungen oder optische Verbindungen handelt. Ebenso kann eine Unterscheidung dahingehend erfolgen, ob es sich um Busverbindungen, z.B. basierend auf Profibus, oder um Ethernet-Verbindungen, insbesondere basierend auf Industrial Ethernet bzw. Profinet, handelt.

In einer weiteren Ausführungsform des erfindungsgemäßen Verfahrens umfassen die Gerätetypen Typen von Ethernet-Switches und/oder Steuergeräten und/oder Sensoren und/oder Aktoren und/oder Rechnern, wie PCs oder Servern.

In einer weiteren Ausgestaltung des erfindungsgemäßen Verfahrens werden die den Hierarchieebenen entsprechenden Abschnitte auf der Benutzerschnittstelle in vertikaler Richtung überangeordnet, wobei ein Abschnitt einer höheren Hierarchieebene weiter oben auf der Benutzerschnittstelle positioniert ist. Hierdurch wird besonders intuitiv die hierarchische Struktur der Automatisierungsanlage visuell vermittelt.

In einer weiteren Ausgestaltung des erfindungsgemäßen Verfahrens werden die Gerätetypen auch bei der Positionierung der Geräte innerhalb eines jeweiligen, einer Hierarchieebene entsprechenden Abschnitts berücksichtigt. Insbesondere repräsentiert dabei der Ort des jeweiligen Geräts in dem Abschnitt die Nähe des Geräts bzw. Gerätetyps zum Automatisierungsprozess der Automatisierungsanlage. Das heißt, bei vertikaler Anordnung der Hierarchieebenen übereinander werden Gerätetypen, welche näher am Automatisierungsprozess liegen, weiter unten in dem entsprechenden Abschnitt positioniert. Wiederum können je nach Anwendungsfall geeignete Kriterien festgelegt werden, wie nah ein Gerät am Automatisierungsprozess ist, d.h. ob es direkt oder nur mittelbar am Automatisierungsprozess beteiligt ist oder ob es überhaupt eine Komponente der Automatisierungsanlage ist. In einer Ausgestaltung der soeben beschriebenen Variante der Erfindung wird für vorbestimmte Paare von zwei direkt verbundenen Gerätetypen hinterlegt, ob die Gerätetypen nebeneinander oder untereinander in dem jeweiligen Abschnitt positioniert werden.

In einer weiteren Ausgestaltung des erfindungsgemäßen Verfahrens werden auf der Benutzerschnittstelle für zumindest einen Teil der Geräte weitere Informationen zu dem jeweiligen Gerät wiedergegeben, insbesondere der Gerätetyp und/oder die IP-Adresse des jeweiligen Geräts.

Neben dem oben beschriebenen Verfahren betrifft die Erfindung ferner eine Vorrichtung zur rechnergestützten Analyse einer Automatisierungsanlage, welcher mehrere miteinander vernetzte Geräte zugeordnet sind, wobei die Vorrichtung folgende Komponenten umfasst, die als Hardware und/oder Software in geeigneter Weise realisiert werden können:
- ein Mittel zum Erfassen von Informationen zu den Geräten umfassend deren Gerätetypen und Verbindungen untereinander;
- ein Mittel zum Generieren einer Netzwerktopologie, welche die Vernetzung der Geräte repräsentiert;
- ein Mittel zum Zuweisen eines jeweiligen Geräts in Abhängigkeit von dessen Gerätetyp zu einer Hierarchieebene aus einer Mehrzahl von für die Automatisierungsanlage festgelegten Hierarchieebenen;
- eine Benutzerschnittstelle zur Anzeige einer Topologie der Automatisierungsanlage, wobei auf der Benutzerschnittstelle für jede Hierarchieebene ein Abschnitt vorgesehen ist, wobei die einer jeweiligen Hierarchieebene zugewiesenen Geräte als Elemente in den für die jeweilige Hierarchieebene vorgesehenen Abschnitt angeordnet sind und basierend auf der Vernetzung gemäß der Netzwerktopologie miteinander verbunden sind.

Die erfindungsgemäße Vorrichtung ist dabei derart ausgestaltet, dass jede der oben beschriebenen bevorzugten Ausführungsformen des erfindungsgemäßen Verfahrens mit dieser Vorrichtung durchgeführt werden kann.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer Varianten des erfindungsgemäßen Verfahrens, wenn das Programm auf einem Rechner läuft.

Ausführungsbeispiele der Erfindung werden nachfolgend anhand der beigefügten Figuren detailliert beschrieben.

Es zeigen:
- Fig. 1: eine schematische Darstellung einer Topologie einer Automatisierungsanlage, welche basierend auf einer Ausführungsform des erfindungsgemäßen Verfahrens generiert wurde; und
- Fig. 2: eine schematische Darstellung einer weiteren Topologie einer Automatisierungsanlage, welche die Zuweisung von Geräten zu Hierarchieebenen basierend auf einer Ausführungsform der Erfindung verdeutlicht.

In den nachfolgend beschriebenen Ausführungsformen des erfindungsgemäßen Verfahrens wird basierend auf Informationen von einzelnen Geräten, welche unmittelbar bzw. mittelbar der Automatisierungsanlage zugeordnet sind, eine geeignete Topologie der Automatisierungsanlage in der Form von mehreren Hierarchieebenen generiert. Zunächst werden hierzu im Betrieb der Automatisierungsanlage Informationen der einzelnen Geräte in einer entsprechenden Überwachungseinheit gesammelt, welche zur Ausführung des erfindungsgemäßen Verfahrens dient. Insbesondere werden die Informationen durch die Überwachungseinheit unter Verwendung eines Netzwerkprotokolls gesammelt, wobei vorzugsweise das aus dem Stand der Technik bekannte SNMP-Protokoll verwendet wird. Informationen zu den einzelnen Geräten werden ferner basierend auf dem aus dem Stand der Technik bekannten LLDP-Protokoll zwischen benachbarten Geräten ausgetauscht. In jedem Gerät sind dabei lokal Informationen zu dem Gerät selbst und seinen Nachbargeräten in einer sog. MIB (MIB = Management Information Base) abgelegt. Im Rahmen der hier beschriebenen Ausführungsform werden diese Informationen aus allen Geräten mittels SNMP durch die Überwachungseinheit ausgelesen. Basierend darauf kann dann mit an sich bekannten Verfahren die Netzwerktopologie zwischen den Geräten abgeleitet werden, wobei diese Topologie zunächst keine weiteren Informationen zu den entsprechenden Typen der Geräte enthält. Nichtsdestotrotz sind die Informationen zu den Gerätetypen der einzelnen Geräte aus den MIBs der Geräte ausgelesen worden und werden nach Generierung der Netzwerktopologie in geeigneter Weise verarbeitet, wie im Folgenden näher beschrieben wird.

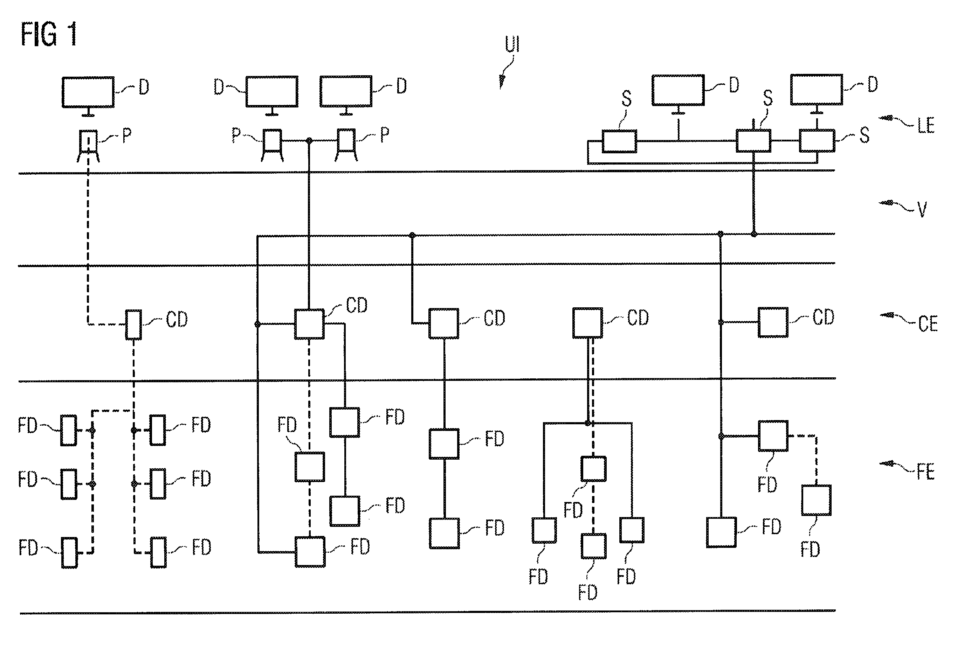

Im Rahmen des erfindungsgemäßen Verfahrens sind eine Mehrzahl von Hierarchieebenen für die betrachtete Automatisierungsanlage festgelegt, wobei die Hierarchieebenen an entsprechende Ebenen der aus dem Stand der Technik bekannten Automatisierungspyramide angelehnt sind. Jeder Hierarchieebene können dabei entsprechende Geräte zugeordnet werden, welche sich im Hinblick auf ihre Funktionalitäten in Bezug auf die Automatisierungsanlage unterscheiden. Basierend auf den Hierarchieebenen wird erfindungsgemäß auf einer entsprechenden Benutzerschnittstelle die Topologie der Automatisierungsanlage wiedergegeben, wobei Fig. 1 ein Beispiel einer Topologie mit den entsprechenden Hierarchieebenen zeigt.

Im Ausführungsbeispiel der Fig. 1, welche eine erfindungsgemäße Anzeige auf einer Benutzerschnittstelle UI wiedergibt, werden drei Hierarchieebenen FE, CE und LE betrachtet, wobei jeder Hierarchieebene ein vertikaler Abschnitt auf der Anzeige zugeordnet ist. Die Hierarchieebene FE entspricht dabei einer sog. Feldebene, welche Feldgeräte FD enthält, die unmittelbar an dem über die Automatisierungsanlage durchgeführten Fertigungs- bzw. Produktionsprozess beteiligt sind. Insbesondere handelt es sich dabei um entsprechende Aktoren bzw. Sensoren bzw. Eingabe- und/oder Ausgabegeräte sowie gegebenenfalls Schaltgeräte, welche die anderen Geräte der Ebene FE verschalten. An die Feldebene FE schließt sich eine nächsthöhere Hierarchieebene CE an, welche eine sog. Steuerungsebene darstellt, in der übergeordnete Steuergeräte CD enthalten sind, welche Gruppen von entsprechenden Feldgeräten FD steuern. An diese Ebene CE schließt sich eine weitere Ebene V an, welche keine Hierarchieebene im Sinne der Erfindung darstellt, sondern lediglich die informationstechnologische Vernetzung der Ebene CE mit der nächsthöheren Hierarchieebene LE verdeutlicht, welche die sog. Leitebene ist, die unter anderem Geräte beinhaltet, welche die Automatisierungsanlage als Ganzes überwachen, bzw. Geräte von IT-Netzwerken, welche zwar an die Automatisierungsanlage angebunden sind, jedoch nicht direkter Teil der Automatisierungsanlage sind. Es kann sich dabei z.B. um Geräte eines Netzwerks eines Unternehmens handeln, welche für die Planung, den Entwurf und den Betrieb der Automatisierungsanlage zuständig ist.

In Fig. 1 sind beispielhaft als Geräte der Ebene LE drei Rechner in der Form von PCs P mit entsprechend zugeordneten Bildschirmen D angedeutet. Ferner sind als weitere Geräte der Ebene LE Server S gezeigt, auf welche über entsprechende Bildschirme D zugegriffen werden kann. In der Ausführungsform der Fig. 1 gehören dabei die Rechner P im linken Teil der Figur zu einem entsprechenden Unternehmensnetz, welches an die Automatisierungsanlage angebunden ist. Es kann sich bei diesen Rechnern z.B. um sog. Engineering-Stationen bzw. Telefonserver bzw. andere Rechner handeln. Die Server S im rechten Teil der Leitebene LE stellen demgegenüber entsprechende Rechner dar, mit denen eine Diagnose bzw. Überwachung des Realbetriebs des technischen Systems durchgeführt wird. Dabei können hinlänglich aus dem Stand der Technik bekannte Überwachungssysteme mit entsprechender Software, z.B. basierend auf einem WinCC-Server, eingesetzt werden. Vorzugsweise wird die Darstellung der Fig. 1 auf einem der Diagnose- oder Überwachungsserver S generiert und auf einem entsprechenden Display D angezeigt.

In dem Ausführungsbeispiel der Fig. 1 sind die einzelnen Vernetzungen zwischen den Geräten zum einen mit durchgezogenen Linien und zum anderen mit gestrichelten Linien angedeutet. Durchgezogene Linien repräsentieren dabei Ethernet-Verbindungen basierend auf dem bekannten Standard Profinet. Demgegenüber repräsentieren in Fig. 1 gestrichelte Linien Verbindungen basierend auf dem bekannten Standard Profibus. Anstatt die Verbindungen über durchgezogene bzw. gestrichelte Linien zu unterscheiden, besteht gegebenenfalls auch die Möglichkeit, die Verbindungen in unterschiedlichen Farben wiederzugeben. Wie aus Fig. 1 ersichtlich ist, dient der Rechner P am linken Rand der Fig. 1 lediglich zur Ansteuerung entsprechender Geräte über Profibus, wohingegen mit den weiteren Rechnern P bzw. den Servern S sowohl Geräte über Profinet als auch über Profibus miteinander vernetzt sind. Ferner zeigt Fig. 1, dass ein Steuergerät CD in der Ebene CE autark arbeitet und nicht über Geräte in höheren Hierarchieebenen überwacht wird. Dieses Steuergerät ist dabei das vierte Steuergerät von links und kann beispielsweise eine Prüfstation mit einem entsprechenden Panel zur Eingabe und Ausgabe von Werten umfassen.

Die Darstellung der Fig. 1 ist lediglich schematisch, d.h. die einzelnen Geräte sind nur durch schematisch angedeutete Komponenten wiedergegeben. Die in Fig. 1 dargestellten Bezugszeichen sind dabei nicht Teil der Darstellung. Vorzugsweise werden die einzelnen Geräte in der Form von Icons wiedergegeben, welche schon auf die Funktion der einzelnen Geräte hindeuten. Ferner sind Informationen zu den verschiedenen Geräten als Textfelder (aus Übersichtlichkeitsgründen nicht gezeigt) in der Nachbarschaft der einzelnen Icons wiedergegeben, so dass ein Benutzer schnell erkennt, um welche Geräte es sich handelt. Innerhalb der Textfelder können neben den Gerätenamen gegebenenfalls weitere Informationen zu den Geräten, beispielsweise entsprechende IP-Adressen der Geräte im Netz, wiedergegeben werden.

Bei der in Fig. 1 dargestellten Automatisierungsanlage kann es sich um eine beliebige industrielle Anlage zur Steuerung eines automatisierten Prozesses handeln. Beispielsweise kann die Anlage der Fig. 1 eine Abfüllanlage für Getränke darstellen, wobei in diesem Fall die einzelnen Steuergeräte CD entsprechenden Stationen in der Abfüllanlage zugeordnet sind, wie z.B. einem Transportband, einem Lager für Getränkeflaschen, einer Verdeckelstation für abgefüllte Flaschen, einer Entdeckelstation für rückgelieferte Flaschen, einer Recyclingstation für rückgelieferte Flaschen, Prüfstationen, Einheiten zum Greifen von Flaschen, einer Station zum Abfüllen der Flaschen und dergleichen.

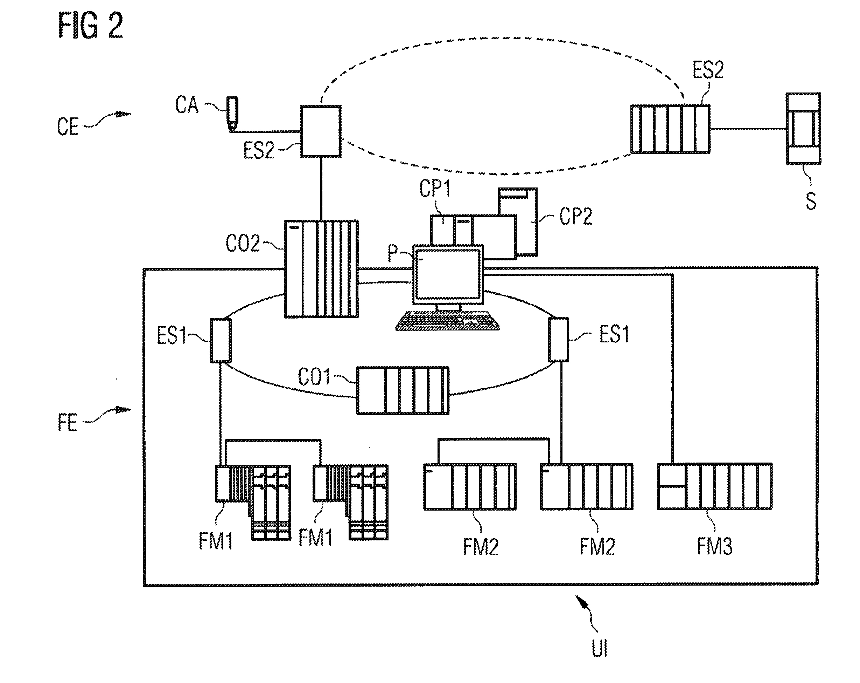

Fig. 2 verdeutlicht eine weitere erfindungsgemäße Visualisierung der Topologie einer Automatisierungsanlage auf einer Benutzerschnittstelle UI in der Form einer Anzeigeeinrichtung. Wiederum sind die entsprechend dargestellten Bezugszeichen nicht Teil der Darstellung. Ferner sind Informationen zu den einzelnen Geräten in der Form von (nicht gezeigten) Textfeldern benachbart zu den Geräten wiedergegeben. Im Unterschied zu Fig. 1 umfasst die wiedergegebene Automatisierungsanlage nur zwei Hierarchieebenen in der Form einer Feldebene FE und einer Steuerungsebene CE. Anhand von Fig. 2 wird nunmehr erläutert, wie in Abhängigkeit von entsprechend ausgelesenen Gerätetypen die Zuordnung zu Hierarchieebenen erfolgen kann.

In der in Fig. 2 dargestellten Automatisierungsanlage ist eine Vielzahl von Ethernet-Switches vorgesehen, wobei die einzelnen Ethernet-Switches zu unterschiedlichen Serien gehören. Die Ethernet-Switches ES1 stellen Typen von Ethernet-Switches einer Serie dar, wohingegen die Ethernet-Switches ES2 zu einer anderen Serie gehören. Insbesondere handelt es sich bei den Ethernet-Switches ES1 um Ethernet-Switches der SCALANCE X200-Serie der Siemens AG (z.B. SCALANCE X204IRT oder SCALANCE X208). Im Unterschied zu den Switches ES1 gehören die in der Steuerungsebene CE angeordneten Switches ES2 zu der SCALANCE X300-Serie. Insbesondere ist der in der Steuerungsebene im linken Teil dargestellte Ethernet-Switch ES2 ein SCALANCE X308-2 Switch, wohingegen der Ethernet-Switch ES2 im rechten Teil der Fig. 1 ein SCALANCE X408-2 Ethernet-Switch ist.

Basierend auf der hier beschriebenen Ausführungsform werden alle Switches der SCALANCE X200-Serie sowie auch der darunter liegenden Serie SCALANCE X100 in die Feldebene FE positioniert, da sie zur direkten Verschaltung von im Feld der Automatisierungsanlage verwendeten Geräten dienen. In Fig. 2 sind dabei entsprechende Feldgeräte mit Bezugszeichen FM1, FM2 und FM3 angedeutet. Die einzelnen Geräte stellen entsprechende Typen von Funktionsmodulen der SIMATIC-Serie der Siemens AG dar. Insbesondere sind die Geräte FM1 ET 200S-Module, die Geräte FM2 ET 200pro-Module und das Gerät FM3 ein ET 200M-Modul. Für all diese Gerätetypen ist erfindungsgemäß festgelegt, dass diese Feldgeräte darstellen und in der Feldebene FE angeordnet sind. Die einzelnen Funktionsmodule dienen dabei je nach betrachtetem Automatisierungssystem zur Durchführung entsprechender Aufgaben im Feld, wie z.B. Zählen, Positionieren, Regeln, Verstellen und dergleichen.

In der Feldebene FE der Fig. 2 sind als weitere Geräte entsprechende Fertigungscontroller CO1 und CO2 vorgesehen, wobei für entsprechende Gerätetypen dieser Controller wiederum spezifiziert ist, dass diese in der Feldebene FE angeordnet werden. Dabei ist ferner spezifiziert, dass Controller von einem bestimmten Typ sowohl in der Feldebene FE als auch in der Kontrollebene CE als Schnittstelle zwischen den beiden Ebenen angeordnet werden. Der in Fig. 2 gezeigte Controller CO2 stellt einen solchen Controller dar, wobei durch eine entsprechende graphische Darstellung ersichtlich wird, dass der Controller zu beiden Ebenen FE und CE gehört. Im Unterschied zum Controller CO2 ist der Typ des Controllers CO1 eindeutig der Feldebene FE zugeordnet.

Darüber hinaus ist in Fig. 2 ein entsprechender Steuerungs-PC P wiedergegeben, der analog zu dem Controller CO2 wiederum als Schnittstelle beiden Ebenen FE und CE zugeordnet ist. Der PC ist dabei z.B. ein sog. Microbox-PC der Siemens AG, der für den Einsatz in Automatisierungsanlagen ausgelegt ist. Für solche PCs ist spezifiziert, dass sie zumindest zu der Steuerungsebene und je nach Typ gegebenenfalls auch zur Feldebene und unter Umständen auch nur zur Feldebene gehören. Der PC P umfasst entsprechende Kommunikationsprozessoren CP1 und CP2 (z.B. Prozessoren vom Typ CP1616/CP1604 der Siemens AG). Im Rahmen der hier beschriebenen Ausführungsform konnte dabei über die Netzwerktopologie ermittelt werden, dass diese Prozessoren Bestandteil des PCs P sind. Solche Kommunikationsprozessoren, welche insbesondere entsprechende Netzwerkkarten darstellen, werden in der Ausführungsform der Fig. 2 in unmittelbarer Nachbarschaft zu dem entsprechenden Gerät angeordnet, in dem sie integriert sind, bzw. nicht mehr als separates Element in der Darstellung gezeigt. Insbesondere beinhalten die Controller CO1 und CO2 bereits die entsprechenden Kommunikationsprozessoren. Dabei wird über entsprechende (aus Übersichtlichkeitsgründen nicht gezeigte) Textfelder an den Controllern CO1 bzw. CO2 wiedergegeben, um welche Art von Controller es sich handelt und welche Prozessoren diese enthalten. In Fig. 2 handelt es sich bei dem Controller CO1 um den Controller SIMATIC S7-300 mit Kommunikationsprozessor CP343-1 Advanced der Siemens AG. Demgegenüber ist der Controller CO2 der Controller SIMATIC S7-400 mit Kommunikationsprozessor CP443-1 Advanced der Siemens AG.

In Analogie zu der Ausführungsform der Fig. 1 sind entsprechende Verbindungen zwischen den einzelnen dargestellten Geräten durch Linien angedeutet, wobei durchgezogene Linien für elektrische Ethernet-Verbindungen stehen. Ferner sind gestrichelte Linien zwischen den beiden Ethernet-Switches ES2 in der Steuerungsebene CE vorgesehen, wobei diese Linien eine optische Ehternet-Verbindung mittels Lichtwellenleiter darstellen. In Fig. 2 ist in der Steuerungsebene CE ferner eine Kamera CA gezeigt, welche mit dem Ethernet-Switch ES2 im linken Teil der Fig. 2 verbunden ist. Ferner ist ein Server S in der Form eines WinCC-Servers mit Kommunikationsprozessor CP1623 gezeigt, der mit dem Ethernet-Switch ES2 im rechten Teil der Fig. 2 verbunden ist. Für beide Geräte wird im Rahmen der hier beschriebenen Ausführungsform spezifiziert, dass diese Geräte zu der Steuerungsebene CE gehören.

Wie sich aus Fig. 2 ergibt, sind auch innerhalb der einzelnen Hierarchieebenen verschiedene Niveaus vorgesehen. Um die Anordnung von Geräten innerhalb einer Hierarchieebene in solchen Niveaus zu erreichen, wird im Rahmen des erfindungsgemäßen Verfahrens berücksichtigt, welche Paare von Geräten direkt miteinander verbunden sind. In der in Fig. 2 dargestellten Topologie wird dabei beispielsweise berücksichtigt, dass direkt miteinander verbundene Funktionsmodule immer nebeneinander auf dem gleichen Niveau der Hierarchieebene FE angeordnet werden, wohingegen die Verbindung eines Ethernet-Switches mit einem Funktionsmodul zu einem Übergang von einem Niveau in ein tiefer liegendes Niveau in der Hierarchieebene FE führt. In gleicher Weise können basierend auf entsprechenden Informationen die einzelnen Niveaus in den anderen Hierarchieebenen bzw. zwischen anderen Geräten generiert werden.

Die im Vorangegangenen beschriebenen Ausführungsformen des erfindungsgemäßen Verfahrens sind lediglich beispielhaft. Insbesondere können je nach betrachteter Automatisierungsanlage beliebige Hierarchieebenen zur Beschreibung der Topologie der Automatisierungsanlage festgelegt werden, wobei tiefer liegende Hierarchieebenen Geräte spezifizieren, welche näher am direkten, über die Automatisierungsanlage durchgeführten Fertigungs- bzw. Produktionsprozess liegen. Erfindungsgemäß wird zunächst die entsprechende Netztopologie zwischen den einzelnen Geräten erzeugt, welche zunächst lediglich die Verbindungen zwischen den einzelnen Geräten wiedergibt. Anschließend erfolgt dann die Ableitung einer aussagekräftigen Darstellung zur Beschreibung der Automatisierungsanlage in der Form einer hierarchischen Struktur, welche an Ebenen der Automatisierungspyramide angelehnt ist bzw. diesen entspricht. Die Generierung dieser hierarchischen Struktur erfolgt automatisch und muss nicht manuell durch einen entsprechenden Benutzer konfiguriert werden, wie dies in Automatisierungsanlagen gemäß dem Stand der Technik der Fall ist.

Das erfindungsgemäße Verfahren zeichnet sich somit durch eine automatische Generierung entsprechender Topologien von Automatisierungsanlagen aus, welche in geeigneter Weise auf einer Benutzerschnittstelle angezeigt werden. Ein Benutzer bekommt auf diese Weise schnell ein Bild von der Struktur der Automatisierungsanlage, welches wesentlich aussagekräftiger ist als die reine Wiedergabe der Netzwerkstruktur der miteinander verbundenen Geräte. Die erfindungsgemäß generierte Anzeige kann im Rahmen der Überwachung seiner Automatisierungsanlage verwendet werden, um bei Ausfallen von Netzverbindungen schnell zu erkennen, welcher Teil der Automatisierungsanlage betroffen ist. Dabei können Ausfälle in der dargestellten Topologie der Automatisierungsanlage durch entsprechende Warnmeldungen bzw. Hervorhebung ausgefallener Datenverbindungen angezeigt werden.

## Patentansprüche

1. Verfahren zur rechnergestützten Analyse einer Automatisierungsanlage, welcher mehrere miteinander vernetzte Geräte (FD, CD, P, S, D) zugeordnet sind, bei dem:
- Informationen zu den Geräten (FD, CP, P, S, D) umfassend deren Gerätetypen und Verbindungen untereinander erfasst werden und eine Netzwerktopologie generiert wird, welche die Vernetzung der Geräte (FD, CD, P, S, D) repräsentiert;
- ein jeweiliges Gerät (FD, CD, P, S, D) in Abhängigkeit von dessen Gerätetyp einer Hierarchieebene (FE, CE, LE) aus einer Mehrzahl von für die Automatisierungsanlage festgelegten Hierarchieebenen (FE, CE, LE) zugewiesen wird;
- eine Topologie der Automatisierungsanlage auf einer Benutzerschnittstelle (UI) angezeigt wird, auf welcher für jede Hierarchieebene (FE, CE, LE) ein Abschnitt vorgesehen ist, wobei die einer jeweiligen Hierarchieebene zugewiesenen Geräte (FE, CE, LE) als Elemente in dem für die jeweilige Hierarchieebene vorgesehenen Abschnitt angeordnet sind und basierend auf der Vernetzung gemäß der Netzwerktopologie miteinander verbunden sind,
**dadurch gekennzeichnet, daß** vorbestimmte Paare von Gerätetypen, welche direkt gemäß der Netzwerktopologie miteinander verbunden sind, benachbart oder als ein gemeinsames Element auf der Benutzerschnittstelle (UI) angeordnet werden.

2. Verfahren nach Anspruch 1, bei dem die Zuweisung eines Geräts (FD, CD, P, S, D) zu einer Hierarchieebene (FE, CE, LE) die Nähe des Geräts (FD, CD, P, S, D) zu dem Automatisierungsprozess der Automatisierungsanlage repräsentiert, wobei die Nähe zum Automatisierungsprozess umso größer ist, je tiefer die Hierarchieebene liegt.

3. Verfahren nach Anspruch 1 oder 2, bei dem die Mehrzahl von Hierarchieebenen (FE, CE, LE) eine Feldebene (FE) und eine Steuerungsebene (CE) umfasst, wobei der Feldebene (FE) direkt am Automatisierungsprozess der Automatisierungsanlage beteiligte Geräte (FD, CD, P, S, D) zugewiesen werden und der Steuerungsebene (CE) mittelbar an dem Automatisierungsprozess beteiligte Geräte (FD, CD, P, S, D) zugewiesen werden.

4. Verfahren nach Anspruch 3, bei dem die Mehrzahl von Hierarchieebenen (FE, CE, LE) eine über der Feldebene (FE) und der Steuerungsebene (CE) angeordnete Leit- und/oder Unternehmensebene (LE) enthält, welcher die Automatisierungsanlage überwachende Geräte (FD, CD, P, S, D) und/oder außerhalb der Automatisierungsanlage angeordnete Geräte (FD, CD, P, S, D) zugewiesen werden.

5. Verfahren nach einem der vorhergehenden Ansprüche, bei dem vorbestimmte Gerätetypen jeweils zwei benachbarten Hierarchieebenen (FE, CE, LE) zugeordnet werden können und auf der Benutzerschnittstelle (UI) zwischen den entsprechenden Abschnitten dieser Hierarchieebenen (FE, CE, LE) angeordnet werden können.

6. Verfahren nach einem der vorhergehenden Ansprüche, bei dem die Netzwerktopologie verschiedene Verbindungsarten zwischen den Geräten (FD, CD, P, S, D) spezifiziert, wobei auf der Benutzerschnittstelle (UI) die verschiedenen Verbindungsarten visuell unterschieden werden.

7. Verfahren nach einem der vorhergehenden Ansprüche, bei dem die Gerätetypen Typen von Ethernet-Switches und/oder Steuergeräten und/oder Sensoren und/oder Aktoren und/oder Rechnern umfassen.

8. Verfahren nach einem der vorhergehenden Ansprüche, wobei bei der Zuweisung von Geräten (FD, CD, P, S, D) zu Hierarchieebenen (FE, CE, LE) neben dem Gerätetyp ferner der Aufstellort des jeweiligen Geräts (FD, CD, P, S, D) berücksichtigt wird.

9. Verfahren nach einem der vorhergehenden Ansprüche, bei dem die den Hierarchieebenen (FE, CE, LE) entsprechenden Abschnitte auf der Benutzerschnittstelle (UI) in vertikaler Richtung übereinander angeordnet sind, wobei ein Abschnitt einer höheren Hierarchieebene (FE, CE, LE) weiter oben auf der Benutzerschnittstelle (UI) positioniert ist.

10. Verfahren nach einem der vorhergehenden Ansprüche, bei dem die Positionierung von Geräten (FE, CE, LE) innerhalb eines jeweiligen, einer Hierarchieebene (FE, CE, LE) entsprechenden Abschnitts in Abhängigkeit von deren Gerätetypen erfolgt, wobei der Ort des jeweiligen Geräts (FD, CD, P, S, D) in dem Abschnitt insbesondere die Nähe des Geräts zum Automatisierungsprozess der Automatisierungsanlage repräsentiert.

11. Verfahren nach Anspruch 10, bei dem für vorbestimmte Paare von zwei direkt verbundenen Gerätetypen hinterlegt ist, ob die Gerätetypen nebeneinander oder untereinander in dem jeweiligen Abschnitt positioniert werden.

12. Verfahren nach einem der vorhergehenden Ansprüche, bei dem auf der Benutzerschnittstelle (UI) für zumindest einen Teil der Geräte (FD, CD, P, S, D) Informationen zu dem jeweiligen Gerät wiedergegeben sind, insbesondere der Gerättyp und/oder die IP-Adresse des jeweiligen Geräts.

13. Vorrichtung zur rechnergestützten Analyse einer Automatisierungsanlage, welcher mehrere miteinander vernetzte Geräte (FD, CD, P, S, D) zugeordnet sind, umfassend:
- ein Mittel zum Erfassen von Informationen zu den Geräten (FD, CD, P, S, D) umfassend deren Gerätetypen und Verbindungen untereinander;
- ein Mittel zum Generieren einer Netzwerktopologie, welche die Vernetzung der Geräte (FD, CD, P, S, D) repräsentiert;
- ein Mittel zum Zuweisen eines jeweiligen Geräts (FD, CD, P, S, D) in Abhängigkeit von dessen Gerätetyp zu einer Hierarchieebene (FE, CE, LE) aus einer Mehrzahl von für die Automatisierungsanlage festgelegten Hierarchieebenen (FE, CE, LE);
- eine Benutzerschnittstelle (UI) zur Anzeige einer Topologie der Automatisierungsanlage, auf welcher für jede Hierarchieebene (FE, CE, LE) ein Abschnitt vorgesehen ist, wobei die einer jeweiligen Hierarchieebene zugewiesenen Geräte (FE, CE, LE) als Elemente in dem für die jeweilige Hierarchieebene vorgesehenen Abschnitt angeordnet sind und basierend auf der Vernetzung gemäß der Netzwerktopologie miteinander verbunden sind,
wobei die Vorrichtung derart ausgestaltet ist, dass mit der Vorrichtung ein Verfahren nach einem der Ansprüche 1 bis 12 durchführbar ist.

14. Computerprogrammprodukt mit einem auf einem maschinenlesbaren Träger gespeicherten Programmcode zur Durchführung eines Verfahrens nach einem der Ansprüche 1 bis 12, wenn das Programm auf einem Rechner läuft.

## Claims

1. Method for computer-aided analysis of an automation plant to which a plurality of networked devices (FD, CD, P, S, D) are assigned, wherein:
- information pertaining to the devices (FD, CP, P, S, D) including their device types and interconnections is acquired and a network topology is generated which represents the networking of the devices (FD, CD, P, S, D);
- a respective device (FD, CD, P, S, D) is assigned, according to its device type, to one hierarchy level (FE, CE, LE) of a plurality of hierarchy levels (FE, CE, LE) defined for the automation plant;
- a topology of the automation plant is displayed on a user interface (UI) on which a section is provided for each hierarchy level (FE, CE, LE), the devices (FE, CE, LE) assigned to a respective hierarchy level being disposed as elements in the section provided for the respective hierarchy level and being interconnected on the basis of the networking according to the network topology,
**characterised in that** predetermined pairs of device types which are directly interconnected according to the network topology are disposed adjacently or as a common element on the user interface (UI) .

2. Method according to claim 1, wherein the assignment of a device (FD, CD, P, S, D) to a hierarchy level (FE, CE, LE) represents the proximity of the device (FD, CD, P, S, D) to the automation process of the automation plant, wherein the lower the hierarchy level, the greater the proximity to the automation process.

3. Method according to claim 1 or 2, wherein the plurality of hierarchy levels (FE, CE, LE) comprise a field level (FE) and a control level (CE), devices (FD, CD, P, S, D) directly involved in the automation process of the automation plant being assigned to said field level (FE) and devices (FD, CD, P, S, D) indirectly involved in the automation process of the automation plant being assigned to said control level (CE).

4. Method according to claim 3, wherein the plurality of hierarchy levels (FE, CE, LE) include, disposed above the field level (FE) and the control level (CE), a process control and/or management level (LE) to which devices (FD, CD, P, S, D) monitoring the automation plant and/or devices (FD, CD, P, S, D) disposed outside the automation plant are assigned.

5. Method according to one of the preceding claims, wherein predetermined device types can be assigned to two adjacent hierarchy levels (FE, CE, LE) and can be disposed between the corresponding sections of said hierarchy levels (FE, CE, LE) on the user interface (UI).

6. Method according to one of the preceding claims, wherein the network topology specifies different types of connection between the devices (FD, CD, P, S, D), said types of connection being visually differentiated on the user interface (UI).

7. Method according to one of the preceding claims, wherein the device types comprise types of Ethernet switches and/or control devices and/or sensors and/or actuators and/or computers.

8. Method according to one of the preceding claims, wherein for the assignment of devices (FD, CD, P, S, D) to hierarchy levels (FE, CE, LE), not only the device type but also the installation location of the respective device (FD, CD, P, S, D) is taken into account.

9. Method according to one of the preceding claims, wherein the user interface (UI) sections corresponding to the hierarchy levels (FE, CE, LE) are disposed vertically one above the other, a section of a higher hierarchy level (FE, CE, LE) being positioned higher up on the user interface (UI).

10. Method according to one of the preceding claims, wherein devices (FE, CE, LE) are positioned within a respective section corresponding to a hierarchy level (FE, CE, LE) according to their device types, the position of the respective device (FD, CD, P, S, D) in the section representing in particular the proximity of the device to the automation process of the automation plant.

11. Method according to claim 10, wherein for predetermined pairs of two directly connected device types it is specified whether the device types are positioned next to one another or one below the other in the respective section.

12. Method according to one of the preceding claims, wherein information pertaining to the respective device is reproduced on the user interface (UI) for at least some of the devices (FD, CD, P, S, D), in particular the device type and/or the IP address of the respective device.

13. Apparatus for computer-aided analysis of an automation plant to which a plurality of networked devices (FD, CD, P, S, D) are assigned, comprising:
- a means of acquiring information pertaining to the devices (FD, CD, P, S, D), comprising their device types and interconnections;
- a means of generating a network topology representing the networking of the devices (FD, CD, P, S, D);
- a means of assigning a respective device (FD, CD, P, S, D) according to its device type to one hierarchy level (FE, CE, LE) of a plurality of hierarchy levels (FE, CE, LE) defined for the automation plant;
- a user interface (UI) for displaying a topology of the automation plant and on which a section is provided for each hierarchy level (FE, CE, LE), the devices (FE, CE, LE) assigned to a respective hierarchy level being disposed as elements in the section provided for the respective hierarchy level and being interconnected on the basis of the networking according to the network topology,
wherein the apparatus is implemented such that a method as claimed in one of claims 1 to 12 can be carried out by the apparatus.

14. Computer program product having a program code stored on a machine-readable media for carrying out a method according to one of claims 1 to 12 when the program is run on a computer.

## Revendications

1. Procédé d'analyse assisté par ordinateur d'une installation d'automatisation, à laquelle sont associés plusieurs appareils ( FD, CD, P, S, D ) mis en réseau entre eux, dans lequel :
- on saisit des informations sur les appareils ( FD, CD, P, S, D ) comprenant leur type et leur liaison entre eux et on produit une topologie de réseau qui représente la mise en réseau des appareils ( FD, CD, P, S, D ),
- on affecte un appareil ( FD, CD, P, S, D ) respectif en fonction de son type à un plan ( FE, CE, LE ) hiérarchique parmi une multiplicité de plans ( FE, CE, LE ) hiérarchiques fixés par l'installation d'automatisation,
- on affiche une topologie de l'installation d'automatisation sur une interface ( UI ) utilisateur sur laquelle il est prévu pour chaque plan ( FE, CE, LE ) hiérarchique une section, les appareils ( FE, CE, LE ) affectés à un plan hiérarchique respectif étant disposés comme éléments dans la section prévue pour le plan hiérarchique respectif et étant sur la base de la mise en réseau reliés entre eux suivant la topologie du réseau,
**caractérisé en ce que** des paires déterminées à l'avance des types d'appareils, qui sont reliés entre eux directement suivant la topologie du réseau, sont disposées en étant voisines ou sous la forme d'un élément commun sur l'interface ( UI ) utilisateur.

2. Procédé suivant la revendication 1, dans lequel l'affectation d'un appareil ( FD, CD, P, S, D ) à un plan ( FE, CE, LE ) hiérarchique représente la proximité de l'appareil ( FD, CD, P, S, D ) au processus d'automatisation de l'installation d'automatisation, la proximité au processus d'automatisation étant d'autant plus grande que le plan hiérarchique est plus bas.

3. Procédé suivant la revendication 1 ou 2, dans lequel la multiplicité de plans ( FE, CE, LE ) hiérarchiques comprend un plan ( FE ) de terrain et un plan (CE) de commande, des appareils ( FD, CD, P, S, D ) participant directement au processus d'automatisation de l'installation d'automatisation étant affectés au plan ( FE ) de terrain et des appareils ( FD, CD, P, S, D ) participant indirectement au processus d'automatisation étant affectés au plan ( CE ) de commande.

4. Procédé suivant la revendication 3, dans lequel la multiplicité de plans ( FE, CE, LE ) hiérarchiques comporte un plan ( LE ) directeur et/ou d'entreprise, qui est au dessus du plan ( FE ) de terrain et du plan ( CE ) de commande et auquel des appareils ( FD, CD, P, S, D ) contrôlant l'installation d'automatisation et/ou des appareils ( FD, CD, P, S, D ) disposés à l'extérieur de l'installation d'automatisation sont affectés.

5. Procédé suivant l'une des revendications précédentes, dans lequel des types d'appareils déterminés à l'avance peuvent être affectés respectivement à deux plans ( FE, CE, LE ) hiérarchiques voisins et peuvent être disposés sur l'interface ( UI ) utilisateur entre les sections correspondantes de ces plans ( FE, CE, LE ) hiérarchiques.

6. Procédé suivant l'une des revendications précédentes, dans lequel la topologie du réseau spécifie des types de liaison différents entre les appareils ( FD, CD, P, S, D ), les types de liaison différents étant différents visuellement sur l'interface ( UI ) utilisateur.

7. Procédé suivant l'une des revendications précédentes, dans lequel les types d'appareil comprennent des types de commutateur Ethernet et/ou des appareils de commande et/ou des capteurs et/ou des actionneurs et/ou des ordinateurs.

8. Procédé suivant l'une des revendications précédentes, dans lequel, pour l'affectation d'appareil ( FD, CD, P, S, D ) à des plans ( FE, CE, LE ) hiérarchiques, il est tenu compte outre du type d'appareil de l'emplacement où l'appareil ( FD, CD, P, S, D ) respectif est installé.

9. Procédé suivant l'une des revendications précédentes, dans lequel des sections correspondant aux plans ( FE CE LE ) respectifs sont disposés les unes au dessus des autres dans la direction verticale sur l'interface ( UI ) utilisateur, une section d'un plan ( FE CE LE ) hiérarchique plus haut étant placé plus haut sur l'interface ( UI ) utilisateur.

10. Procédé suivant l'une des revendications précédentes, dans lequel le positionnement d'appareils ( FE, CE, LE ) dans une section respective correspondant à un plan ( FE, CE, LE ) hiérarchique s'effectue en fonction de leurs types d'appareil, l'emplacement de l'appareil ( FD, CD, P, S, D ) respectif étant représenté dans la section, notamment la proximité de l'appareil au processus d'automatisation de l'installation d'automatisation.

11. Procédé suivant la revendication 10, dans lequel, pour des paires déterminées à l'avance de deux types d'appareil reliés directement, il est mémorisé si les types d'appareil sont positionnés l'un à côté de l'autre ou l'un en dessous de l'autre dans la section respective.

12. Procédé suivant l'une des revendications précédentes, dans lequel il est reproduit sur l'interface ( UI ) utilisateur pour au moins une partie des appareils ( FD, CD, P, S, D ) des informations sur l'appareil respectif, notamment le type d'appareil et/ou l'adresse IP de l'appareil respectif.

13. Dispositif d'analyse assisté par ordinateur d'une installation d'automatisation à laquelle sont affectés plusieurs appareils ( FD, CD, P, S, D ) mis en réseau entre eux, comprenant :
- un moyen d'acquisition d'informations sur les appareils ( FD, CD, P, S, D ) comprenant leur type et leurs liaisons entre eux,
- un moyen de production d'une topologie du réseau, qui représente la mise en réseau des appareils ( FD, CD, P, S, D ),
- un moyen d'affectation d'un appareil ( FD, CD, P, S, D ) respectif en fonction de son type à un plan ( FE, CE, LE ) hiérarchique choisi parmi une multiplicité de plans ( FE, CE, LE ) hiérarchiques fixés pour l'installation d'automatisation ;
- une interface ( UI ) utilisateur pour l'affichage d'une topologie de l'installation d'automatisation, sur laquelle il est prévu une section pour chaque plan ( FE, CE, LE ) hiérarchique, les appareils ( FE, CE, LE ) affectés à un plan hiérarchique respectif étant disposés comme éléments dans la section prévue pour le plan hiérarchique respectif et étant sur la base de la mise en réseau reliés entre eux suivant la topologie du réseau,
le dispositif étant tel qu'un procédé suivant l'une des revendications 1 à 12 peut être effectué par le dispositif.

14. Produit de programme informatique comprenant un code de programme mémorisé sur un support pouvant être lu par une machine pour la mise en oeuvre d'un procédé suivant l'une des revendications 1 à 12 lorsque le programme se déroule sur un ordinateur.
